# EUROPÄISCHE PATENTANMELDUNG

(11) **EP 2 372 889 A2**
(43) Veröffentlichungstag der Anmeldung: **05.10.2011**
(21) Anmeldenummer: 11153198.4
(22) Anmeldetag: 03.02.2011
(51) Int. Cl.: H02M 3/158

(54) **Schaltungsanordnung und Verfahren zur Erzeugung einer Wechselspannung aus einer Mehrzahl von ungeregelten Spannungsquellen mit zeitlich variabler Ausgangsgleichspannung**

(30) Priorität: 31.03.2010 US 319603 P
(71) Anmelder: SEMIKRON Elektronik GmbH & Co. KG, 90431 Nürnberg (DE)
(72) Erfinder: Haddad, Kevork, Newark Valley NY, 13811 (US); Schreiber, Dejan, 90408, Nürnberg (DE)

(57) **Zusammenfassung**

Die Anmeldung betrifft ein Schaltungsanordnung mit einer Mehrzahl von geregelten, parallel geschalteten Spannungsquellen, einer Wechselrichterschaltung und einer Regeleinheit, sowie ein Verfahren zu deren Ansteuerung. Die geregelten Spannungsquellen bestehen aus einer ungeregelten, Spannungsquelle mit zeitlich variabler Ausgangsgleichspannung, einem Aufwärtswandler und einer zugeordneten Regeleinrichtung, wobei der Aufwärtswandler ein Drei-Punkt Aufwärtswandler ist. Die Regeleinheit weist eine Messeinrichtung für die Zwischenkreisspannung der Wechselrichterschaltung auf und ist mit den Regeleinrichtungen der geregelten Spannungsquellen zur deren Ansteuerung verbunden. Bei dem Verfahren zur Ansteuerung bestimmt die Regeleinheit die Spannung im Zwischenkreis der Wechselrichterschaltung und ermittelt hieraus abhängig von der maximalen und der minimal zulässigen Zwischenkreisspannung einen Sollwert der Ausgangsspannung für die geregelten Spannungsquellen. Dieser Sollwert wird an die Regeleinrichtungen übermittelt, woraus die Regeleinrichtungen die Ansteuerbedingungen für den Aufwärtswandler bestimmen und diesen entsprechend ansteuern.

## Beschreibung

Die Erfindung beschreibt eine Schaltungsanordnung, sowie ein Verfahren zu deren Ansteuerung, zur Erzeugung einer Wechselspannung aus einer Mehrzahl von ungeregelten Spannungsquellen mit zeitlich variabler Ausgangsgleichspannung. Als derartige ungeregelte Spannungsquellen sind Photovoltaikanlagen oder Teile dieser Anlagen bevorzugt. Unter einer Photovoltaikanlage soll hier ausschließlich die Anordnung und elektrische Verbindung einer Mehrzahl von Photovoltaikmodulen verstanden werden, Teilanlagen sind hier ebenfalls subsumiert. Derartige Photovoltaikmodule sind zu Photovoltaikanlagen zusammengeschlossen und weisen eine bauartbedingte und von der Sonneneinstrahlung abhängige und somit zeitlich langsam variable Ausgangsgleichspannung auf. Diese Änderungen der Ausgangsgleichspannung weisen Zeitkonstanten im Minutenbereich oder in längeren Zeiteinheiten auf.

Zu Einspeisung des Ausgangsstroms einer derartigen Photovoltaikanlagen in das öffentliche oder ein lokales Stromnetz muss die Ausgangsgleichspannung, mittels einer Wechselrichterschaltung, in eine Wechselspannung konstanter Frequenz und Spannung umgewandelt werden.

Eine beispielhafte Schaltungsanordnung zur Erzeugung einer derartigen Wechselspannung ist in der DE 10 2008 034 955 A1 beschrieben. Hier ist eine Stromrichteranordnung offenbart, die eine Photovoltaikanlage mit zeitlich variierender Ausgangsspannung, einen Pegelwandler und einen Wechselrichter aufweist. In dem zugehörigen Verfahren wird der erste und zweite Kondensator des Pegelwandlers unabhängig von der Eingangsspannung mit jeweils dem halben Wert der Sollzwischenkreisspannung geladen.

Für derartige Schaltungsanordnungen gibt es eine Vielzahl vom Anwendungsfall abhängiger und sich teilweise widerstrebender Anforderungen. Beispielhafte sollen die einzelnen Photovoltaikmodule möglichst linear belastet werden, d.h. deren Ausgangsstrom soll zeitlich möglichst konstant sein innerhalb von Zeitintervallen, wie sie für Leistungshalbleiterschaltungen typisch sind, also im Zeitbereich kleiner einer Sekunde, bzw. in einem Frequenzbereich oberhalb von 1Hz. Ebenso soll die Eingangsspannung an der Wechselrichterschaltung möglichst konstant sein, wie auch die Übertragung von der Photovoltaikanlage zur Wechselrichterschaltung mit möglichst hoher Spannung erfolgen soll, um Leitungsverluste klein zu halten. Schließlich soll die gesamte Schaltungsanordnung mit einem hohen Wirkungsgrad arbeiten. Gleichzeitig sollte die Photovoltaikanlage, bzw. die Photovoltaikmodule derart betrieben werden, dass sie im Punkt der höchsten Leistungsabgabe (MPP - maximum power point) arbeitet. Hierzu ist eine geeignete Regelung, das sog. MPP- Tracking erforderlich.

Der Erfindung liegt die Aufgabe zugrunde eine Schaltungsanordnung und ein zugehöriges Verfahren vorzustellen zur Erzeugung einer Wechselspannung aus einer Mehrzahl von Spannungsquellen mit jeweils zeitlich variabler Ausgangsgleichspannung, wobei ein breiter Gleichspannungsbereich dieser Spannungsquellen effizient nutzbar und die Übertragung zur Wechselrichterschaltung mit möglichst geringen Verlusten behaftet ist.

Die Aufgabe wird erfindungsgemäß gelöst, durch eine Schaltungsanordnung mit den Merkmalen des Anspruchs 1, sowie durch ein Verfahren gemäß Anspruch 5. Bevorzugte Ausführungsformen sind in den jeweiligen abhängigen Ansprüchen beschrieben.

Die erfindungsgemäße Schaltungsanordnung weist eine Mehrzahl von geregelten, parallel geschalteten Spannungsquellen, mindestens eine mit einem Transformator verbindbare Wechselrichterschaltung und eine Regeleinheit auf.

Hierbei bestehen die geregelten Spannungsquellen jeweils aus einer ungeregelten, Spannungsquelle mit zeitlich variabler Ausgangsgleichspannung, einem Aufwärtswandler und einer zugeordneten Regeleinrichtung. Die ungeregelte Spannungsquelle ist vorzugsweise eine Photovoltaikanlage, wobei deren Ausgänge zusätzlich mittels eines Kondensators verbunden sein können.

Der Aufwärtswandler seinerseits ist mit seinen Eingängen an den Ausgängen der ungeregelten Spannungsquelle angeschlossen und weist einen Strompfad positiver Polarität, den positiven Zweig, und einen Strompfad negativer Polarität, den negativen Zweig, auf. An dem Eingang des positiven Zweigs des Aufwärtswandlers ist eine erste Spule und an deren Ausgang die Anode einer ersten Diode angeordnet, deren Kathode direkt mit dem Ausgang positiver Polarität des Aufwärtswandlers verbunden ist, der gleichzeitig den Ausgang der geregelten Spannungsquelle bildet. An dem Eingang des negativen Zweigs des Aufwärtswandlers ist eine zweite Spule und an deren Ausgang die Kathode einer zweiten Diode angeordnet, deren Anode direkt mit dem negativen Ausgang des Aufwärtswandlers verbunden ist und der gleichzeitig den Ausgang negativer Polarität der geregelten Spannungsquelle bildet.

Zwischen der Anode der ersten Diode und der Kathode der zweiten Diode ist die beiden Zweige verbindend eine Halbbrückenschaltung aus einem ersten und einem zweiten Leistungstransistor angeordnet. Zwischen der Kathode der ersten Diode und der Anode der zweiten Diode ist, die beiden Zweige verbindend, eine Serienschaltung aus zwei Kondensatoren angeordnet. Die jeweiligen Mittelanzapfungen der Halbbrückenschaltung und der Serienschaltung der Kondensatoren sind miteinander verbunden und können gleichzeitig mit Grundpotential verbunden sein.

Weiterhin weist jede geregelte Spannungsquelle zur ihrer Regelung, also der Ansteuerung der ersten und zweiten Leistungstransistoren eine Regeleinrichtung auf, die mit der Regeleinheit verbunden sind. Diese zentrale Regeleinheit ist mit einer Messeinrichtung für die Zwischenkreisspannung der Wechselrichterschaltung verbunden und steuert die Regeleinrichtungen der geregelten Spannungsquellen.

Das erfindungsgemäße Verfahren zur Ansteuerung einer derartigen Schaltungsanordnung zeichnet sich im wesentlichen dadurch aus, dass die Regeleinheit die Spannung im Zwischenkreis der Wechselrichterschaltung bestimmt und hieraus abhängig von der maximalen und der minimal zulässigen Zwischenkreisspannung einen Sollwert der Ausgangsspannung der geregelten Spannungsquellen ermittelt. Dieser Sollwert wird an die Regeleinrichtungen übermittelt. Dort werden aus diesem Sollwert die Ansteuerbedingungen für den jeweiligen Aufwärtswandler bestimmen und dieser entsprechend angesteuert.

Zusätzlich kann es vorteilhaft sein, wenn die Regeleinheiten der geregelten Spannungsquellen die Ausgangsgleichspannung der ungeregelten Gleichspannungsquellen und / oder den Verstärkungsfaktor des eigenen Aufwärtswandlers an die Regeleinheit zurückmelden. Diese Rückmeldung kann somit in die Bestimmung eines neuen Sollwertes der Ausgangsspannung der geregelten Spannungsquellen einfließen.

Ebenso kann es vorteilhaft sein, wenn die Aufwärtswandler der jeweiligen Spannungsquellen gegeneinander zeitlich versetzt, und möglicherweise zusätzlich geringfügig phasenverschoben, getaktet werden. Hierbei ist die Phasenverschiebung innerhalb einer Schaltperiode proportional dem Reziprokwert der Anzahl der Spannungsquellen, oder einem kleinen ganzzahligen Vielfachen hiervon. Speziell hierbei, aber nicht beschränkt hierauf kann es weiterhin besonders bevorzugt sein, wenn die ersten und zweiten Spulen benachbarter Spannungsquellen auf einem gemeinsamen Kern angeordnet sind. Dies führt zur einem Kopplungseffekt der Spulen, wie er auch in einem Transformator vorliegt. Um diesen Kopplungseffekt möglichst wirkungsvoll zu nutzen sollten der Gesamtversatz des Taktes der jeweiligen Aufwärtswandler der benachbarten Stromquellen exakt oder möglichst nahe an einem Viertel der Schaltperiode liegen.

Die erfinderische Lösung wird an Hand der Ausführungsbeispiele der Fig. 1 bis 4 weiter erläutert.

Fig. 1 zeigt eine geregelte Spannungsquelle einer erfindungsgemäßen Schaltungsanordnung.

Fig. 2 zeigt eine erfindungsgemäße Schaltungsanordnung.

Fig. 3 zeigt Stromverläufe durch benachbarte erste und zweite Spulen einer geregelten Spannungsquelle bei Anwendung eines erfindungsgemäßen Verfahrens.

Fig. 4 zeigt eine weitere erfindungsgemäße Schaltungsanordnung.

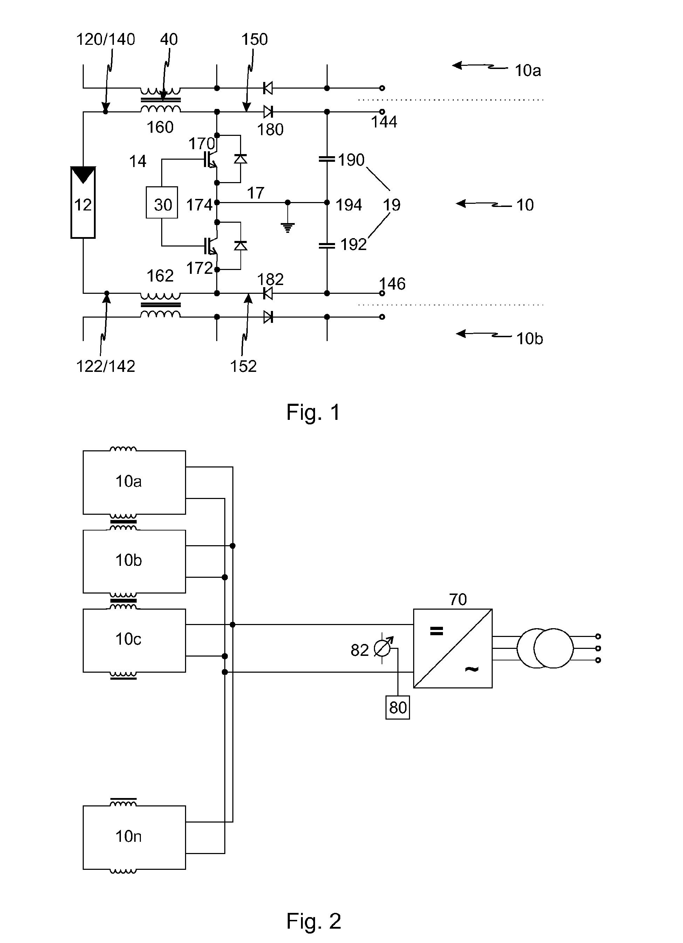

Fig. 1 zeigt eine geregelte Spannungsquelle (10) einer erfindungsgemäßen Schaltungsanordnung, sowie nur teilweise dargestellt zwei weitere, hierzu benachbarte, geregelte Spannungsquellen (10a, 10b). Die Versorgung erfolgt je geregelter Spannungsquelle (10) aus einer ungeregelten Spannungsquelle (12) in Form einer Photovoltaikanlage. Typische Werte der Ausgangsgleichspannung der ungeregelten Spannungsquelle (12) liegen hier im Normalbetrieb zwischen 300V und 900V, abhängig von der jeweiligen Jahreszeit und Sonneneinstrahlung. Die Aufgabe des Aufwärtswandlers (14) innerhalb der geregelten Spannungsquelle (10) ist es mittels seiner Regeleinrichtung (30) diese zeitlich schwankende Gleichspannung auf einen, von der Regeleinheit (80) vorgegeben, Spannungswert anzuheben.

Der Aufwärtswandler (14) ist hierzu ist mit seinen Eingängen (140, 142) an den Ausgängen (120, 122) der ungeregelten Spannungsquelle (12) angeschlossen. An den Eingängen (140, 142) beider Zweige des Aufwärtswandlers (14) sind die erste (160) respektive zweite Spule (162) angeordnet und mit den Dioden (180, 182) schaltungsgerecht, wie oben beschrieben, verbunden.

Die beiden Zweige sind weiterhin mittels der Halbbrückenschaltung (17) aus zwei Leistungstransistoren (170, 172) und der Serienschaltung (19) von zwei Kondensatoren (190, 192) verbunden. Die Ansteuerung des Aufwärtswandler (14) erfolgt durch eine lokale Regeleinheit (30) abhängigen vom notwendigen Verstärkungsfaktor indem die beiden Leistungstransistoren (170, 172) zyklisch gegeneinander versetzt eingeschaltet werden, mit oder ohne Überlappung ihrer Einschaltdauer. Durch diese Ansteuerung kann die Eingangsspannung bis zu einem Faktor fünf erhöht werden, ohne dass hierdurch die Verluste besonders signifikant werden. Es kann somit ausgehend von den oben genannten Spannungswerten der ungeregelten Spannungsquelle (12) eine Zwischenkreisspannung an der Wechselrichterschaltung, vgl. Fig. 2, von 1200V oder auch 1700V konstant aufrecht erhalten werden.

Besonders vorteilhaft ist hierbei noch, dass die erste Spule (160) der geregelten Spannungsquelle (10) mit der zweiten Spule (162) der ersten benachbarten geregelten Spannungsquelle (10a) auf einem gemeinsamen Kern (40) angeordnet sind, ebenso wie auch die zweite Spule (162) der geregelten Spannungsquelle (10) mit der ersten Spule (160) der zweiten benachbarten geregelten Spannungsquelle (10b) auf einem gemeinsamen Kern (40) angeordnet sind.

Fig. 2 zeigt eine erfindungsgemäße Schaltungsanordnung. Hier ist eine Mehrzahl von geregelten Spannungsquellen (10a- 10n), wie unter Fig. 1 beschrieben dargestellt. Die Ausgänge positiver Polarität (144, 146, vgl. Fig. 1) der geregelten Spannungsquellen (10) sind miteinander und mit dem zugeordneten Eingang einer Wechselrichterschaltung (70) über eine Verbindungsleitung verbunden.

Die Wechselrichterschaltung (70) ist in ihrer einfachsten Ausgestaltung ein ZweiPunkt- Drei-Phasen-Wechselrichter, der mittels eines Transformators mit dem zu speisenden Stromnetz verbunden ist. Besonders vorteilhaft ist es allerdings, wenn die Wechselrichterschaltung als Drei-Punkt-Wechselrichter ausgebildet ist. In diesem Fall können für die jeweiligen Aufwärtswandler (14) und auch die Wechselrichterschaltung (70) Leistungshalbleitermodule gleicher Spannungsklasse verwendet werden. Zudem kann die Übertragungsspannung im Verhältnis zur Spannungsklasse dieser Leistungshalbleitermodule höher gewählt werden, als bei einem Zwei-Punkt-Wechselrichter, aufgebaut aus Leistungshalbleitermodulen gleicher Spannungsklasse wie die Aufwärtswandler (14).

Die erfindungsgemäße Schaltungsanordnung weist weiterhin eine Messeinrichtung (82) der Zwischenkreisspannung auf, die mit der übergeordneten Regeleinheit (80) verbunden ist. Diese Regeleinheit (80) wirkt abhängigen vom gemessenen Wert der Zwischenkreisspannung und ggf. weiterer Parameter auf die Regeleinrichtungen (30) der Aufwärtswandler (14) der geregelten Spannungsquellen (10) ein, damit diese den jeweiligen Verstärkungsfaktor sollwertgerecht einstellen können.

Zudem erzeugt die Regeleinrichtung (80) auch die notwendigen Steuersignale für die versetzte und ggf. zusätzlich phasenverschobene Taktung der jeweiligen Aufwärtswandler (14) der geregelten Spannungsquellen (10) zueinander.

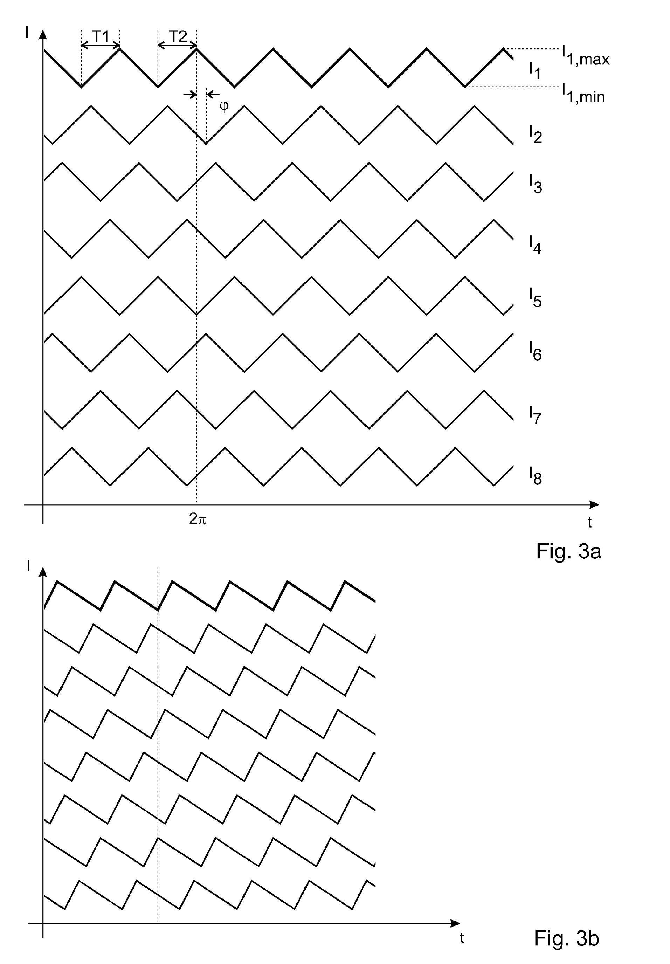

Fig. 3 zeigt schematisch die Stromverläufe durch erste und zweite Spulen (160, 162) einer Schaltungsanordnung mit acht geregelten Spannungsquellen (10) bei Anwendung des erfindungsgemäßen Verfahrens mit versetzter und phasenverschobener Taktung dieser geregelten Spannungsquellen. Hierbei ist der jeweilige Spulenstrom durch die erste und zweite Spule der einzelnen geregelten Spannungsquelle (10) jeweils gleich. Fig. 3a zeigt die Spulenströme (I1 bis I8) von acht geregelten Spannungsquellen (10), wobei die beiden Leistungstransistoren(170, 172) jeder Halbbrückenschaltung (17) um ein halbe Periodendauer, π, versetzt zueinander für jeweils eine viertel Periodendauer, π/2, eingeschaltet sind. Somit ergibt sich für die jeweiligen ersten und zweiten Spulen einer geregelten Spannungsquelle ein nährungsweise sägezahnförmiger Verlauf des Spulenstroms zwischen einem Minimal- (I1,min) und einem Maximalwert I1,max). Hierbei bewirkt die Einschaltdauer von π/2 des ersten Schalters den ersten Stromanstieg innerhalb einer Schaltperiode, 2π, und die Einschaltdauer von π/2 des zweiten Schalters den zweiten Stromanstieg innerhalb der Schaltperiode, 2π, was zu einer Verdopplung der Spannung am Ausgang der geregelten Spannungsquelle im Vergleich zum Ausgang der ungeregelten Spannungsquelle ergibt.

Gemäß einer bevorzugten Ausführungsform der Ansteuerung werden die Halbbrückenschaltungen der jeweils benachbarten geregelten Spannungsquellen um eine viertel Periodendauer, π/2, versetzt angesteuert. Zu diesem Versatz hinzu kommt die Phasenverschiebung (ϕ), die bei acht Spannungsquellen aus Symmetriegründen π/16 entspricht wodurch sich ein Gesamtversatz der Ansteuerung benachbarter Aufwärtswandler von π/2 + π/16 = 9π/16 innerhalb der Schaltperiode ergibt. Hierdurch wird in den Verbindungsleitungen und am Eingang der Wechselrichterschaltung eine gewünschte, zeitlich gering variierende, Spannung erreicht.

Allerdings werden auch durch diese versetzte und phasenverschobene Taktung der Aufwärtswandler (14) der geregelten Spannungsquellen (10) die jeweiligen ungeregelten Spannungsquellen (12) möglicherweise noch nicht ausreichend gleichmäßig belastet, das heißt der Strom an ihrem Ausgang ist zeitlich nicht weitgehend konstant. Dies ist allerdings gerade bei Photovoltaikanlagen eine geforderte Betriebsweise um deren Lebensdauer nicht negativ zu beeinflussen. Um diese Belastung zu linearisieren ist es wie oben bereits genannt zusätzlich zur versetzten Taktung bevorzugte für die ersten und zweiten Spulen benachbarter geregelter Spannungsquellen einen gemeinsamen Kern (40) vorzusehen.

Bei der genannten Betriebsweise und dieser Anordnung wird Energie von einer geregelten Spannungsquelle (10) durch die Transformatorwirkung auf eine oder bevorzugt beide benachbarte geregelte Spannungsquellen übertragen, wodurch dort der Gesamtstrom durch die Spule zeitlich wesentlich weniger schwankt als ohne diese Transformatorwirkung. Hierdurch werden also die ungeregelten Spannungsquelle wesentlich gleichmäßiger belastet, da deren Ausgangsstrom nun weitgehend konstant ist.

Fig. 3b zeigt grundsätzlich die gleichen Stromverläufe wie Fig. 3a allerdings mit einem anderen Verstärkungsfaktor zwischen Ausgang der ungeregelten Spannungsquelle (12) und Ausgang (144, 146) der geregelten Spannungsquelle (10). Dies erfolgt durch ein geändertes Tastverhältnis beim Schalten der Leistungstransistoren (170, 172) und zeigt sich in dem geänderten Spulenstrom, der wiederum ohne die Auswirkungen der Transformatorwirkung dargestellt ist. Auch bei einem geänderten Tastverhältnis führt die genannte Kopplung benachbarter Aufwärtswandler (14) über ihre Spulen zu einer Linearisierung der Strombelastung der ungeregelten Spannungsquellen.

Durch die Ausgestaltung der geregelten Spannungsquellen (10) mit je einer Regeleinrichtung (30) ist zudem das MPP- Tacking zur Erzielung des bestmöglichen Wirkungsgrades einer Photovoltaikanlage (12) gleichzeitig mit den oben genannten Funktionen vereinbar.

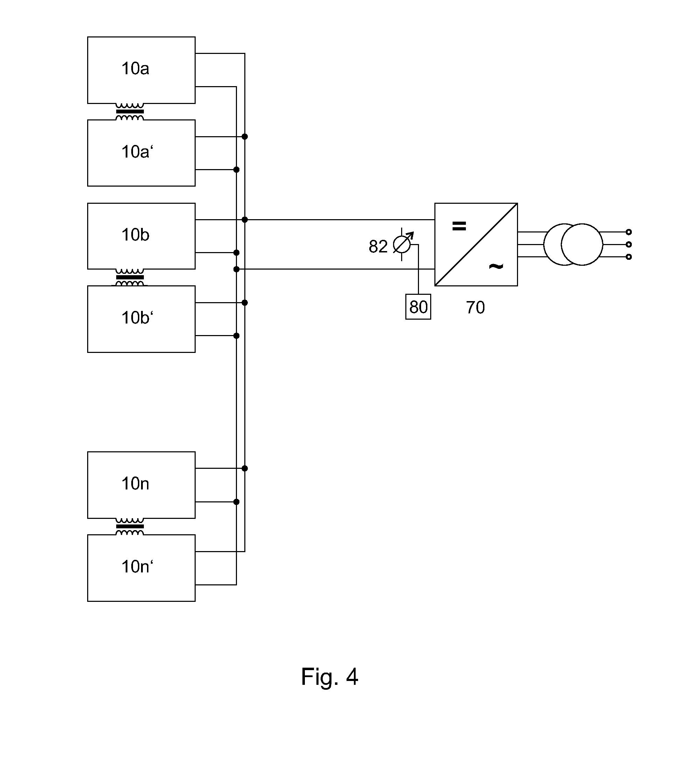

Fig. 4 zeigt eine weitere erfindungsgemäße Schaltungsanordnung. Hier ist wiederum eine Mehrzahl von geregelten Spannungsquellen (10a bis 10n') dargestellt. In dieser Ausgestaltung sind allerdings nur jeweils benachbarte geregelte Spannungsquellen (10a, 10 a' bis 10n, 10n') miteinander transformatorisch mittels eines gemeinsamen Kerns (40) paarweise verbunden.

Hierzu ist eine erste Spule einer geregelten Spannungsquelle mit einer zweiten Spule genau einer benachbarten geregelten Spannungsquelle verbunden. Die weiteren Spulen, die zweite der ersten und die erste Spule der benachbarten geregelten Spannungsquelle, weisen keine transformatorischen Kopplung auf.

Die Ausgänge positiver Polarität der geregelten Spannungsquellen (10) sind miteinander und mit dem zugeordneten Eingang einer Wechselrichterschaltung (70) über eine Verbindungsleitung verbunden.

Bei einer derartigen Ausbildung der Schaltungsanordnung ist es bevorzugt die benachbarten und transformatorisch verbundenen geregelten Spannungsquellen gegeneinander um exakt π/2 versetzt zueinander zu takten. Eine Synchronisierung zwischen mehreren Paaren ist hier nicht notwendigerweise vorgesehen.

## Patentansprüche

1. Schaltungsanordnung mit einer Mehrzahl von geregelten, parallel geschalteten Spannungsquellen (10), einer Wechselrichterschaltung (70) und einer Regeleinheit (80), wobei
die geregelten Spannungsquellen (10) jeweils bestehen aus einer ungeregelten, Spannungsquelle (12) mit zeitlich variabler Ausgangsgleichspannung, einem Aufwärtswandler (14) und einer zugeordneten Regeleinrichtung (30),
wobei der Aufwärtswandler (14) mit seinen Eingängen (140, 142) an den Ausgängen (120, 122) der Gleichspannungsquelle (12) angeschlossen und somit einen positiven (150) und negativen Zweig (152) aufweist in dem jeweils nach dem Eingang im ersten Zweig eine erste Spule (160) und im zweiten Zweig eine zweite Spule (162) angeordnet ist, diese Spulen sind mit einer Halbbrückenschaltung (17) von Leistungstransistoren (170, 172) und je einer Diode (180, 182) verbunden, im positiven Zweig mit deren Anode, im negativen Zweig mit deren Kathode, die jeweils zweiten Anschlüsse der Dioden (180, 182) sind mit einer Reihenschaltung (19) von zwei Kondensatoren (190, 192) verbunden, deren Mittelanzapfung (194) mit der Mittelanzapfung (174) der Halbbrückenschaltung (17) verbunden ist und die den Ausgang (144, 146) der geregelten Spannungsquelle (10) ausbilden und
wobei die Regeleinheit (80) eine Messeinrichtung (82) für die Zwischenkreisspannung der Wechselrichterschaltung (70) aufweist und mit den Regeleinrichtungen (30) der geregelten Spannungsquellen (10) zur deren Ansteuerung verbunden ist.

2. Schaltungsanordnung (1) nach Anspruch 1, wobei
zwischen den Ausgängen (120, 122) der ungeregelten Gleichspannungsquelle (12) jeweils ein Kondensator vorgesehen ist.

3. Schaltungsanordnung (1) nach Anspruch 1, wobei
die ersten (160) und zweiten Spulen (162) benachbarter geregelten Spannungsquellen (10 - 10n) auf einem gemeinsamen Kern (40) angeordnet sind.

4. Schaltungsanordnung (1) nach Anspruch 1, wobei
jeweils eine erste Spule (160) einer ersten geregelten Spannungsquelle (10a-n) und eine zweite Spulen (162) einer benachbarter geregelten Spannungsquellen (10a'-n') auf einem gemeinsamen Kern (40) angeordnet sind.

5. Verfahren zur Ansteuerung einer Schaltungsanordnung nach einem der vorhergehenden Ansprüche, wobei die Regeleinheit (80) die Spannung im Zwischenkreis der Wechselrichterschaltung (70) bestimmt und hieraus abhängig von der maximalen und der minimal zulässigen Zwischenkreisspannung einen Sollwert der Ausgangsspannung für die geregelten Spannungsquellen (10) ermittelt und diese an die Regeleinrichtungen (30) übermittelt, wobei die Regeleinrichtungen (30) aus diesem Sollwert die Ansteuerbedingungen für den Aufwärtswandler (14) bestimmen und diesen entsprechend ansteuern.

6. Verfahren nach Anspruch 5,
wobei die Regeleinrichtungen (30) der geregelten Spannungsquelle (10) die Ausgangsgleichspannung der ungeregelten Gleichspannungsquellen (12) und / oder den Verstärkungsfaktor des eigenen Aufwärtswandlers (14) an die Regeleinheit (80) zurückmelden und diese hieraus eine neuen Sollwert der Ausgangsspannung für die geregelten Spannungsquellen (10) bestimmt.

7. Verfahren nach Anspruch 4 oder 5,
wobei die Aufwärtswandler (14) zweier benachbarter geregelter und mittels eines gemeinsamen Kerns (40) verbundener Spannungsquellen (10) innerhalb einer Schaltperiode gegeneinander zeitlich versetzt getakten werden mit einem Gesamtversatz von einem Viertel der Schaltperiode.

8. Verfahren nach Anspruch 4 oder 5,
wobei die Aufwärtswandler (14) innerhalb einer Schaltperiode (2π) gegeneinander zeitlich versetzt getakten werden mit einem Gesamtversatz benachbarter Aufwärtswandler (14), der nahe einem Viertel der Schaltperiode (2π) liegt.

9. Verfahren nach Anspruch 8
wobei der Gesamtversatz sich aus einem Versatz von genau einem Viertel der Schaltperiode (2π) und aus einer jeweiligen Phasenverschiebung (ϕ) benachbarter Aufwärtswandler (10) gebildet wird, wobei der Phasenversatz (ϕ) zum Reziprokwert der Anzahl der Spannungsquellen (10), oder einem kleinen ganzzahligen Vielfachen hiervon, proportional ist.
